# EUROPEAN PATENT SPECIFICATION

(11) **EP 2 938 872 B1**
(45) Date of publication and mention of the grant of the patent: **30.01.2019**
(21) Application number: 13867313.2
(22) Date of filing: 18.02.2013
(51) Int. Cl.: F02K 3/04, F01D 5/30

(54) **BLADE UNDERROOT SPACER WITH HOOK REMOVAL**
SCHAUFELUNTERFUSSABSTANDSHALTER MIT HAKENENTFERNUNG
ENTRETOISE DE PIEDS DE PALE AVEC DÉSENGAGEMENT DE CROCHET

(30) Priority: 27.12.2012 US 201261746164 P
(43) Date of publication of application: 04.11.2015
(73) Proprietor: United Technologies Corporation, Farmington, CT 06032 (US)
(72) Inventor: MURDOCK, James R., Tolland, Connecticut 06084 (US)
(74) Representative: Dehns
(86) International application number: PCT/US2013/026561
(87) International publication number: WO 2014/105104

(56) References cited:
- EP-A2- 1 209 322
- EP-A2- 2 395 200
- US-A1- 2007 253 822
- US-A1- 2009 004 017
- US-A1- 2009 252 611
- US-B1- 6 481 971
- US-B2- 6 582 195
- US-B2- 7 824 157

## Description

### BACKGROUND OF THE INVENTION

This application relates to an underblade spacer which has a hook removal feature.

Gas turbine engines are known and, typically, include a fan delivering air into a compressor. Air from the compressor is passed into a combustion section where it is mixed with fuel and ignited. Products of this combustion pass downstream over turbine rotors driving them to rotate. The turbine rotors typically drive a fan rotor and a compressor rotor.

The fan compressor and turbine rotors may all be provided with blades which are removably mounted in slots in a rotor hub. In a fan, as an example, the fan blades often have a dovetail feature which is received within a slot or groove in a fan rotor. To bias the fan blade outwardly against surfaces of the hub, a resilient spacer is typically positioned radially inwardly of an underside of the fan blade. The resilient spacer may be inserted into the slot in the hub after the blade is mounted within the slot, as it may be pushed into a radial space between the underside of the blade dovetail and the slot. However, removing the spacer is challenging.

Typically, a threaded bore is formed in the spacer and a threaded removal member is turned into the threaded bore and then pulled.

The use of a threaded removal hole is expensive. Further, it requires a minimal total spacer thickness and eliminates many materials that might otherwise be useful for the spacer.

A prior art rotor for use in a gas turbine engine, a gas turbine engine and method of removing a blade from a rotor for use in a gas turbine engine having the features of the preamble to claims 1, 6 and 7 is disclosed in EP 2 395 200. Other prior art rotors, gas turbine engines and methods are disclosed in EP 1 209 322 and US 2007/253822.

### SUMMARY OF THE INVENTION

From one aspect, the present invention provides a rotor for use in a gas turbine engine in accordance with claim 1.

In an embodiment of the above rotor, the spacer is formed of a composite material.

In another embodiment according to any of the above rotors, the rotor is a fan rotor.

In another embodiment according to any of the above rotors, there is a radially outer surface and a radially inner surface for the spacer. The slot extends from the radially outer surface partially into a body of the spacer, but does not reach the radially inner surface.

In another embodiment according to any of the above rotors, the spacer has a radially outer surface and a radially inner surface. The slot extends entirely through a body of the spacer from the radially outer surface to the radially inner surface.

From another aspect, the present invention provides a gas turbine engine having at least one of a fan, a compressor and a turbine. At least one of the fan, compressor and turbine includes any of the above rotors.

From yet another aspect, the present invention provides a method of removing a blade from a rotor for use in a gas turbine engine in accordance with claim 7.

These and other features may be best understood from the following drawings and specification.

### BRIEF DESCRIPTION OF THE DRAWINGS

Figure 1 shows a gas turbine engine.
Figure 2 is a detail of a fan hub.
Figure 3 shows a detail of the spacer.
Figure 4 shows a method step in removal of the spacer.
Figure 5 shows features of the spacer.
Figure 6 shows an alternative spacer.

### DETAILED DESCRIPTION

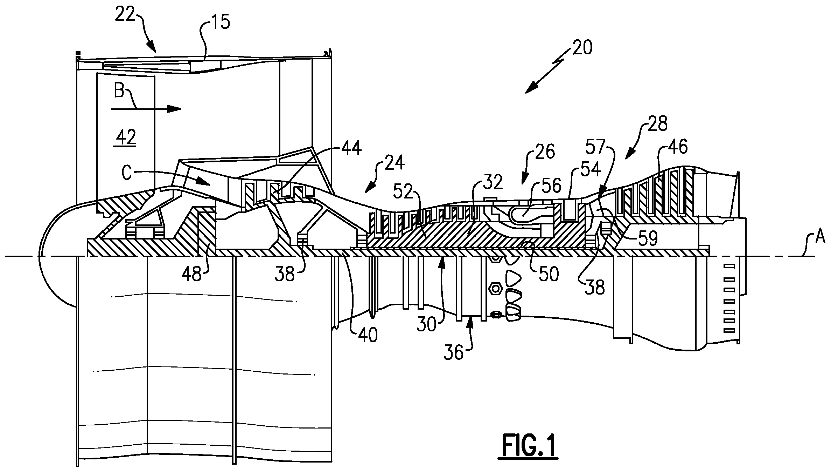

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 20 in one example is a high-bypass geared aircraft engine. In a further example, the engine 20 bypass ratio is greater than about six (6), with an example embodiment being greater than ten (10), the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10.7 km). The flight condition of 0.8 Mach and 35,000 ft (10.7 km), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (°R = K x 9/5). The "Low corrected fan tip speed" as disclosed herein according to one non-limiting embodiment is less than about 1150 ft / second (351 m/s).

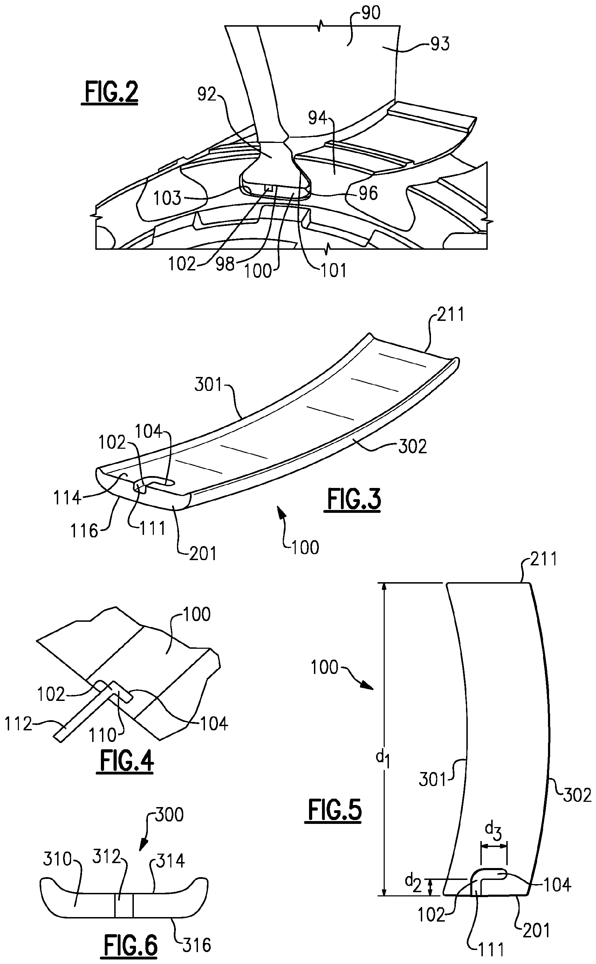

Figure 2 shows a fan blade 90 mounted with a dovetail 92 in a hub 94. As known, an airfoil 93 extends radially outwardly of the dovetail 92 relative to the engine core axis A (see Figure 1). The dovetail 92 is received within a slot 96 within the hub 94. The slot has a lower surface 103, which faces in a radially outer direction, and sidewalls 101, which are contoured to form an acute angle with the lower surface 103, thereby substantially facing a radially inner direction. A spacer 100 biases the dovetail 92 radially outwardly such that sides of the dovetail are urged against sides 101 of the slot 96. This holds the fan blade 90 securely within the slot 96, even when the rotor 94 is being driven to rotate.

Insertion of the spacer 100 is relatively simple as it may be forced into a space between the blade 90 and the slot 96. Removal of the spacer 100, however, can be a relatively difficult task.

As shown in Figure 3, a slot 102 is formed with a circumferentially extending ear 104. Due to the slot, the spacer 100 may be formed of any number of materials and may be thinner than the prior art threaded spacer. As an example, composite materials can be used, which would otherwise not be feasible, since forming a threaded hole in a composite material would be difficult. As is clear, the slot 102 does not extend entirely from a radially outer surface 114 to a radially inner surface 116 in this embodiment.

The slot 102 has an axially extending portion 111, extending from an outer end surface 201 of the spacer 100 to the circumferentially extending ear 104, which is spaced inwardly from the outer end surface 201. While an L-shaped slot 102 is disclosed, any number of other shapes may be utilized.

As shown in Figure 4, a hook 112 is inserted into the slot 102 and the hook 112 has an ear 110 that fits into the circumferentially extending ear 104. The spacer 100 may then be pulled outwardly of the slot 96. Once spacer 100 is removed the blade 90 can then be easily removed.

As can be appreciated in Figures 3 and 5, spacer 100 has curved circumferential sides 301 and 302, and generally parallel surfaces at outer end surface 201 and inner end surface 211. The term "outer" and "inner" refer to a direction further into an associated gas turbine engine.

As shown in Figure 5, a distance d₁ can be defined between outer and inner end surfaces 201 and 211. A second distance d₂ can be defined along the axially extending portion 111, to the location where the circumferentially extending ear 104 begins. The ear 104 extends for a third distance d₃ from the beginning of the axially extending portion 111. In embodiments, d₁ was 7.72 in inch (19.6 cm), d₂ was .393 inch (.998 cm) and d₃ was .627 inch (1.59 cm).

In accordance with the present invention, a ratio of d₂ to d₃ is between .4 and .8. A ratio of d₁ to d₂ is between 15 and 40.

Figure 6 shows another embodiment spacer 300, wherein the slot 312 extends entirely from the radially outer surface 314 to the radially inner surface 316, and into an axially outer end surface 310.

The spacers of this application may be injection molded from an appropriate composite material, such as an engineered plastic. One appropriate engineered plastic is available from DuPont Corporation under the trade name Zytel™.

Of course, other materials may be utilized.

While the spacer is shown as part of a fan blade, it may have applications in other gas turbine engine rotors, such as a compressor or turbine section.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A rotor (94) for use in a gas turbine engine (20) comprising:
a plurality of rotor slots (96), each of said rotor slots (96) receiving a blade (90), said blades (90) having an airfoil (93) extending radially outwardly of a dovetail (92), with the dovetail (92) received within the rotor slot (96); and
a spacer (100;300) positioned radially between a radially inner wall of said dovetail (92) and a radially outer wall (101) of said slot (96), with said spacer (100;300) being formed with a removal slot (102;312), wherein said removal slot (102;312) has an axially extending portion (111) extending from an outer surface (201) of said spacer (100;300) to a circumferentially extending ear (104) spaced inwardly from said outer surface (201), said spacer (100;300) extends axially for a first distance (d₁) between axial end surfaces (201,211), said axially extending portion (111) extends axially for a second distance (d₂) away from an outer one of said axial end surfaces (201,211), and said circumferentially extending ear (104) extends circumferentially for a third distance (d₃) from said axially extending portion (111) ;
**characterised in that**
a ratio of said first distance (d₁) to said second distance (d₂) being between 15:1 and 40:1 and a ratio of said second distance (d₂) to said third distance (d₃) being between 0.4:1 and 0.8:1.

2. The rotor (94) as set forth in claim 1, wherein said spacer (100;300) is formed of a composite material.

3. The rotor (94) as set forth in claim 1 or 2, wherein said rotor (94) is a fan rotor.

4. The rotor (94) as set forth in claim 1, 2 or 3, wherein there being a radially outer surface (114) and a radially inner surface (116) for said spacer (100;300), said removal slot (102;312) extending from said radially outer surface (114) partially into a body of said spacer (100;300), and not reaching said radially inner surface (116).

5. The rotor (94) as set forth in claims 1, 2 or 3, wherein said spacer (100;300) has a radially outer surface (114) and a radially inner surface (116), and said removal slot (102;312) extends entirely through a body of said spacer (100;300) from said radially outer surface (114) to said radially inner surface (116).

6. A gas turbine engine (20) comprising:
at least one of a fan (42), a compressor (44,52) and a turbine (46,54) wherein said at least one of said fan (42), compressor (44,52) and said turbine (46,54) includes the rotor (94) of any preceding claim.

7. A method of removing a blade (90) from a rotor (94) for use in a gas turbine engine (20) comprising the steps of:
inserting a hook (112) into a removal slot (102;312) at an outer end of a spacer (100;300) positioned radially inwardly of a dovetail (92) of the blade (90) to be removed; and
pulling the spacer (100;300) axially out of a rotor slot (96) such that a blade (90) may then be removed;
wherein said removal slot (102;312) has an axially extending portion (111) extending from an outer surface (201) of said spacer (100;300) to a circumferentially extending ear (104) spaced inwardly from said outer surface (201), said spacer (100;300) extends axially for a first distance (d₁) between axial end surfaces (201,211), said axially extending portion (111) extends axially for a second distance (d₂) away from an outer one of said axial end surfaces (201,211), and said circumferentially extending ear (104) extends circumferentially for a third distance (d₃) from said axially extending portion (111) ;
**characterised in that**
a ratio of said first distance (d₁) to said second distance (d₂) being between 15:1 and 40:1 and a ratio of said second distance (d₂) to said third distance (d₃) being between 0.4:1 and 0.8:1.

## Patentansprüche

1. Rotor (94) zur Verwendung in einem Gasturbinentriebwerk (20), der Folgendes umfasst:
eine Vielzahl von Rotorschlitzen (96), wobei jeder der Rotorschlitze (96) ein Blatt (90) aufnimmt, wobei die Blätter (90) eine Luftschaufel (93) aufweisen, die sich von einem Schwalbenschwanz (92) radial nach außen erstrecken, wobei der Schwalbenschwanz (92) innerhalb des Rotorschlitzes (96) aufgenommen ist; und
einen Abstandhalter (100; 300), der radial zwischen einer radial inneren Wand des Schwalbenschwanzes (92) und einer radial äußeren Wand (101) des Schlitzes (96) positioniert ist, wobei der Abstandhalter (100; 300) mit einem Entfernungsschlitz (102; 312) gebildet ist, wobei der Entfernungsschlitz (102; 312) einen sich axial erstreckenden Abschnitt (111) aufweist, der sich von einer äußeren Fläche (201) des Abstandhalters (100; 300) zu einem sich in Umfangsrichtung erstreckenden Ansatz (104), der nach innen von der äußeren Fläche (201) beabstandet ist, erstreckt, wobei sich der Abstandhalter (100; 300) axial über eine erste Entfernung (d₁) zwischen axialen Endflächen (201; 211) erstreckt, wobei sich der sich axial erstreckende Abschnitt (111) axial über eine zweite Entfernung (d₂) von einer äußeren der axialen Endflächen (201; 211) erstreckt und wobei sich der sich in Umfangsrichtung erstreckende Ansatz (104) in Umfangsrichtung über eine dritte Entfernung (d₃) von dem sich axial erstreckenden Abschnitt (111) erstreckt;
**dadurch gekennzeichnet, dass**
ein Verhältnis der ersten Entfernung (d₁) zu der zweiten Entfernung (d₂) zwischen 15:1 und 40:1 liegt und ein Verhältnis der zweiten Entfernung (d₂) zu der dritten Entfernung (d₃) zwischen 0,4:1 und 0,8:1 liegt.

2. Rotor (94) nach Anspruch 1, wobei der Abstandhalter (100; 300) aus einem Verbundmaterial gebildet ist.

3. Rotor (94) nach Anspruch 1 oder 2, wobei der Rotor (94) ein Lüfterrotor ist.

4. Rotor (94) nach Anspruch 1, 2 oder 3, wobei es eine radial äußere Fläche (114) und eine radial innere Fläche (116) für den Abstandhalter (100; 300) gibt, wobei sich der Entfernungsschlitz (102; 312) von der radial äußeren Fläche (114) teilweise in einen Körper des Abstandhalters (100; 300) erstreckt und die radial innere Fläche (116) nicht erreicht.

5. Rotor (94) nach Anspruch 1, 2 oder 3, wobei der Abstandhalter (100; 300) eine radial äußere Fläche (114) und eine radial innere Fläche (116) aufweist, und sich der Entfernungsschlitz (102; 312) ganz durch einen Körper des Abstandhalters (100; 300) von der radial äußeren Fläche (114) zu der radial inneren Fläche (116) erstreckt.

6. Gasturbinentriebwerk (20), das Folgendes umfasst:
mindestens einen eines Lüfters (42), eines Verdichters (44, 52) und einer Turbine (46, 54), wobei der mindestens eine des Lüfters (42), Verdichters (44, 52) und der Turbine (46, 54) den Rotor (94) nach einem der vorhergehenden Ansprüche beinhaltet.

7. Verfahren zum Entfernen eines Blatts (90) von einem Rotor (94) zur Verwendung in einem Gasturbinentriebwerk (20), das die folgenden Schritte umfasst:
Einführen eines Hakens (112) in einen Entfernungsschlitz (102; 312) an einem äußeren Ende eines Abstandhalters (100; 300), der radial nach innen von einem Schwalbenschwanz (92) des zu entfernenden Blatts (90) positioniert ist; und
Ziehen des Abstandhalters (100; 300) axial aus einem Rotorschlitz (96), sodass ein Blatt (90) entfernt werden kann; wobei der Entfernungsschlitz (102; 312) einen sich axial erstreckenden Abschnitt (111) aufweist, der sich von einer äußeren Fläche (201) des Abstandhalters (100; 300) zu einem sich in Umfangsrichtung erstreckenden Ansatz (104), der nach innen von der äußeren Fläche (201) beabstandet ist, erstreckt, wobei sich der Abstandhalter (100; 300) axial über eine erste Entfernung (d₁) zwischen axialen Endflächen (201; 211) erstreckt, wobei sich der sich axial erstreckende Abschnitt (111) über eine zweite Entfernung (d₂) von einem äußeren der axialen Endflächen (201; 211) erstreckt und sich der sich in Umfangsrichtung erstreckende Ansatz (104) in Umfangsrichtung über eine dritte Entfernung (d₃) von dem sich axial erstreckenden Abschnitt (111) erstreckt;
**dadurch gekennzeichnet, dass**
ein Verhältnis der ersten Entfernung (d₁) zu der zweiten Entfernung (d₂) zwischen 15:1 und 40:1 liegt und ein Verhältnis der zweiten Entferndung (d₂) zu der dritten Entfernung (d₃) zwischen 0,4:1 und 0,8:1 liegt.

## Revendications

1. Rotor (94) destiné à être utilisé dans un moteur à turbine à gaz (20) comprenant :
une pluralité d'encoches de rotor (96), chacune desdites encoches de rotor (96) recevant une pale (90), lesdites pales (90) ayant un profil aérodynamique (93) s'étendant radialement vers l'extérieur d'une queue-d'aronde (92), la queue-d'aronde (92) étant reçue à l'intérieur de l'encoche de rotor (96) ; et
une entretoise (100 ; 300) positionnée radialement entre une paroi radialement intérieure de ladite queue-d'aronde (92) et une paroi radialement extérieure (101) de ladite encoche (96), ladite entretoise (100 ; 300) étant formée avec une fente de désengagement (102 ; 312), dans lequel ladite fente de désengagement (102 ; 312) a une partie s'étendant axialement (111) s'étendant depuis une surface externe (201) de ladite entretoise (100 ; 300) vers une oreille s'étendant circonférentiellement (104) espacée vers l'intérieur depuis ladite surface externe (201), ladite entretoise (100 ; 300) s'étend axialement sur une première distance (d₁) entre des surfaces terminales axiales (201, 211), ladite partie s'étendant axialement (111) s'étend axialement sur une deuxième distance (d₂) depuis une, externe, desdites surfaces terminales axiales (201 ; 211), et ladite oreille s'étendant circonférentiellement (104) s'étend circonférentiellement sur une troisième distance (d₃) depuis ladite partie s'étendant axialement (111) ;
**caractérisé en ce que**
un rapport entre ladite première distance (d₁) et ladite deuxième distance (d₂) se situe entre 15:1 et 40:1 et un rapport entre ladite deuxième distance (d₂) et ladite troisième distance (d₃) se situe entre 0,4:1 et 0,8:1

2. Rotor (94) tel que décrit dans la revendication 1, dans lequel ladite entretoise (100 ; 300) est formée d'un matériau composite.

3. Rotor (94) tel que décrit dans la revendication 1 ou 2, dans lequel ledit rotor (94) est un rotor de soufflante.

4. Rotor (94) tel que décrit dans la revendication 1, 2 ou 3, dans lequel on trouve une surface radialement externe (114) et une surface radialement interne (116) pour ladite entretoise (100 ; 300), ladite fente de désengagement (102 ; 312) s'étendant depuis ladite surface radialement externe (114) partiellement dans un corps de ladite entretoise (100 ; 300), et n'atteignant pas ladite surface radialement interne (116).

5. Rotor (94) tel que décrit dans les revendications 1, 2 ou 3, dans lequel ladite entretoise (100 ; 300) a une surface radialement externe (114) et une surface radialement interne (116), et ladite fente de désengagement (102 ; 312) s'étend entièrement au travers d'un corps de ladite entretoise (100 ; 300) depuis ladite surface radialement externe (114) vers ladite surface radialement interne (116).

6. Moteur à turbine à gaz (20) comprenant :
au moins un élément parmi une soufflante (42), un compresseur (44, 52) et une turbine (46, 54) dans lequel ledit au moins un élément parmi ladite soufflante (42), ledit compresseur (44, 52) et ladite turbine (46, 54) inclut le rotor (94) d'une quelconque revendication précédente.

7. Procédé pour retirer une pale (90) d'un rotor (94) destiné à être utilisé dans un moteur à turbine à gaz (20) comprenant les étapes consistant à :
insérer un crochet (112) dans une fente de désengagement (102 ; 312) au niveau d'une extrémité extérieure d'une entretoise (100 ; 300) positionnée radialement vers l'intérieur d'une queue-d'aronde (92) de la pale (90) devant être désengagée ; et
tirer l'entretoise (100 ; 300) axialement hors d'une encoche de rotor (96) de sorte qu'une pale (90) peut alors être désengagée ;
dans lequel ladite fente de désengagement (102 ; 312) dispose d'une partie s'étendant axialement (111) s'étendant depuis une surface externe (201) de ladite entretoise (100 ; 300) vers une oreille s'étendant circonférentiellement (104) espacée vers l'intérieur à partir de ladite surface externe (201), ladite entretoise (100 ; 300) s'étend axialement sur une première distance (d₁) entre des surfaces terminales axiales (201, 211), ladite partie s'étendant axialement (111) s'étend axialement sur une deuxième distance (d₂) à l'opposé d'une, externe, desdites surfaces terminales axiales (201,211), et ladite oreille s'étendant circonférentiellement (104) s'étend circonférentiellement sur une troisième distance (d₃) depuis ladite partie s'étendant axialement (111) ;
**caractérisé en ce que**
un rapport entre ladite première distance (d₁) et ladite deuxième distance (d₂) se situe entre 15:1 et 40:1 et un rapport entre ladite deuxième distance (d₂) et ladite troisième distance (d₃) se situe entre 0,4:1 et 0,8:1.
